(19)

Europäisches
Patentamt
European
Patent Office
Office européen
des brevets

(11) **EP 2 797 000 A1**

(12) **EUROPEAN PATENT APPLICATION**

(43) Date of publication:
**29.10.2014 Bulletin 2014/44**

(51) Int Cl.:
***G06F 11/30*** *(2006.01)*

(21) Application number: **13405051.7**

(22) Date of filing: **25.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Sensirion AG**
**8712 Stäfa (CH)**

(72) Inventors:
• **Niederberger, Dominik**
**8055 Zürich (CH)**

• **Sacchetti, Andrea**
**8051 Zürich (CH)**
• **Böni, Dominic**
**8057 Dielsdorf (CH)**

(74) Representative: **Toleti, Martin**
**c/o E.Blum & Co. AG**
**Vorderberg 11**
**8044 Zürich (CH)**

(54) **Portable electronic device**

(57)     A portable electronic device senses an ambient variable ($T_R$) with a sensor (1). A compensated ambient variable ($T_A$) is determined dependent on at least the sensed ambient variable ($T_S$). A detector is provided for detecting if a system time of the portable electronic device exhibits an anomaly. The determination of the compensated ambient variable ($T_A$) is reset or adjusted if an anomaly is detected in the system time.

FIG. 3

EP 2 797 000 A1

**Description**

Technical Field

The present invention relates to a method for operating a portable electronic device, to a computer program element for operating a portable electronic device, and to a portable electronic device.

Background Art

It is desired to conduct a precise measurement of an ambient variable such as an ambient temperature with a portable electronic device such as a mobile phone or a tablet computer.

Disclosure of the Invention

According to a first aspect of the present invention, a method is provided for operating a portable electronic device. The portable electronic device comprises a sensor for sensing an ambient variable. The ambient variable may be, for example, one of a temperature, humidity, a chemical substance, a flow of gas or liquid, etc. By means of a compensator a compensated ambient variable is determined dependent on at least the sensed ambient variable and possibly dependent on one or more other variables. It is detected if a system time of the portable electronic device exhibits an anomaly, preferably by means of a detector. The compensator resets or adjusts the determination of the compensated ambient variable if an anomaly is detected in the system time.

The compensator in the portable electronic device, which compensator specifically may be embodied as a software running on a central processing unit, may preferably be applied for compensating for undesired effects in measuring the ambient variable. In one embodiment, the compensator compensates for a slow dynamic behavior in the sensed ambient variable compared to a fast dynamic behavior of the real ambient variable. Hence, the compensator may be provided for determining the compensated ambient variable dependent on the sensed ambient variable itself, and specifically dependent on a course of the ambient variable over time such as its slope or its frequency components, i.e. dependent on its dynamics. For example, in case the ambient variable is the ambient temperature of the device and jumps up or down fast, a conventional temperature sensor may only provide a slow asymptotic sensor signal in view of a response time of the temperature measuring system which includes a time for the change in the temperature reaching the temperature sensor in the device, and in view of a response time of the temperature sensor which includes diffusion processes with respect the sensor. Hence, in such compensator, the dynamic components of the sensor signal are adjusted such that the response time of the sensor is reduced.

In another embodiment, the compensator compensates for impacts on the sensed variable originating from other components of the portable electronic device. Again, in case the sensor is a temperature sensor for sensing the ambient temperature, heat generating components of the device may impact the sensing of the ambient temperature for the reason that such heat may be transported via thermal paths in the device to the temperature sensor and results in the temperature value sensed being higher than the real ambient temperature. The compensator may be set up to compensate for such delta. Therefore, it is preferred that a compensated ambient temperature is determined subject to the sensed ambient temperature and dependent on one or more other variables. In one embodiment, there may be provided one or more other temperature sensors in the device for sensing temperatures of heat generating components which temperature signals may represent such other variables. And/or information may be determined related to the power such component/s consume, e.g. which power consumption of a component may represent another variable for compensating the sensed ambient temperature. Here, the compensated ambient temperature is determined by adjusting the sensed ambient temperature by a temperature value representing an impact of heat released from the one or more components.

Given that a compensation model used for one or more of the above mentioned purposes relies on a system time of the device it is critical for the compensation model that the system time does not show anomalies at least during the sensing function being active. Otherwise, the compensation may become erroneous and result in wrong values displayed to the user, for example. Hence, a detector is provided for detecting an anomaly in the system time.

The system time may represent the system time of the portable electronic device and may e.g. be supplied by means of a quartz crystal. The detector may directly verify the system time by suitable means, or may derive an anomaly by means of evaluating time stamps derived from the system time and assigned to sensed ambient variable values, and/or to values of other variables contributing to the compensation if any. Preferably, the sensed ambient variable and/or the other variables if any are supplied in form of time discrete values by the sensor or, in case of the sensor providing analogue values are provided by a preprocessing unit such as an A/D converter for converting the analogue sensor signal into time discrete values. Each ambient variable value preferably is supplied in combination with a time stamp originating from the system time. It is preferred that these time stamps are evaluated, e.g. in relation to each other, for detecting an anomaly in the system time.

Specifically, measures are taken in case the system time is detected to be modified, e.g. by a user. In particular, measures are taken if the system time is detected to be put back. Given that an ambient variable value arriving later than the or a previous ambient variable value the later arrived value should at least be assigned a time stamp which indicates a time later than the time stamp of the previously arrived value. If this is not the case and as such an anomaly representing a put back in the system time is detected, it is preferred to reset the compensation.

However, in another embodiment, measures are also taken if the system time is detected to be put forward. In one embodiment, the system time may be detected being put forward, if the time stamp of a sensed ambient variable value indicates a time ahead of a time stamp supplied by another time base of the portable electronic device. In view of the presence of at least two independent time bases in this example, i.e. the system time and the other time base, the time stamps issued by these at least two sources may be compared and allow for the detection of a modification of the system time. In an alternate embodiment, time stamps originating from the same system time and being assigned to different variables or being used elsewhere in the portable electronic device may be used for implementing a plausibility check for the present system time. For example, a time stamp of a different variable may be compared to a time stamp of the sensed ambient variable. Specifically, if a forward change in the system time has been detected it is preferred to reset the compensation. In an alternative, an alternate time is derived which alternate time represents the system time in an unchanged condition. This alternate time is then applied instead of the modified system time, and values associated with the alternate time are applied in the determination of the compensated ambient variable instead of values associated with the modified system time. Hence, in this variant, the compensation is continued, however by means of values based on amended time stamps.

In another embodiment, a log for recording changes in the system time may be used for detecting if the system time has been changed, be it in forward or in backward direction.

In another variant, it may be detected that the system time has not changed but a time stamp assigned to the sensed ambient variable or another variable may represent a wrong labeling for whatever reason. In this scenario, the compensator may continue to provide compensated ambient variable values, however, based on a corrected time stamp labeling.

In case the sensor is a temperature sensor, the temperature sensor preferably provides a sufficient thermal coupling to the environment of the portable electronic device, e.g. by exposing the temperature sensor to the ambient through openings in a housing of the device or by other means. The compensation may include one or more of the previously described compensations. When applying a heat compensation, the sensed temperature may preferably be corrected by a temperature value owed to heat transferred from a heat source to the temperature sensor. In general, the power consumed in and/or the temperature of the relevant component may be determined or measured and contribute to the determination of the compensated temperature. However, other information may instead or additionally contribute to the determination of the compensated temperature, such as a thermal conductivity of a heat path between the heat source and the temperature sensor, and/or a thermal capacity of one or more of thermal capacitances in the portable electronic device. These measures may make the determination of the compensated temperature even more precise since it takes into account the heat flux that effectively arrives at the temperature sensor rather than the bare heat that is generated at the subject component.

The compensation model preferably is a state space model and has internal states that are used for determining the compensated ambient variable. The compensation model preferably also makes use of internal states of the past. It is preferred, that in response to a resetting in case of a detection of an anomaly in the system time, the internal states of the compensation model are reset to default values.

Preferably, the portable electronic device may be one of a mobile phone, and especially a smart phone, a handheld computer, an electronic reader, a tablet computer, a game controller, a pointing device, a photo or a video camera, a computer peripheral.

According to a further aspect of the present invention, a computer program element is provided for operating a portable electronic device, which computer program element, which preferably is stored on a computer storage medium, comprises computer program code means for executing any of the above embodiments of the method.

Generally, in any of the method, the portable electronic device and the computer program element, the sensor may in an alternative not be provided and/or arranged for sensing a variable ambient to the portable electronic device but may be provided and/or arranged for sensing a variable ambient to the sensor such as a variable within the portable electronic device. For example, such variable may be the temperature of a component. Still, heat generated by other components may impact such measurement and a compensation of such variable shall be included in the scope of the claims, too.

Other advantageous embodiments are listed in the dependent claims as well as in the description below. The described embodiments similarly pertain to the device, the method, and the computer program element. Synergetic effects may arise from different combinations of the embodiments although they might not be described in detail.

Further on it shall be noted that all embodiments of the present invention concerning a method might be carried out in the order of the steps as described. Nevertheless this has not to be the only essential order of steps but all different orders of the method steps where technically feasible shall be comprised in the scope of the claims and be disclosed by the method claims.

Brief Description of the Drawings

The detailed description refers to embodiments of the present invention. Such description makes reference to the annexed drawings, wherein:

Fig. 1 illustrates a mobile phone according to an embodiment of the present invention in diagram a), an associated thermal block diagram in diagram b), and an associate compensator in diagram c),
Fig. 2 shows a chart of different temperature signals over time illustrating the compensating effect according to embodiments of the present invention, and
Fig. 3 shows a flow chart of a method according to an embodiment of the present invention.

Detailed Description

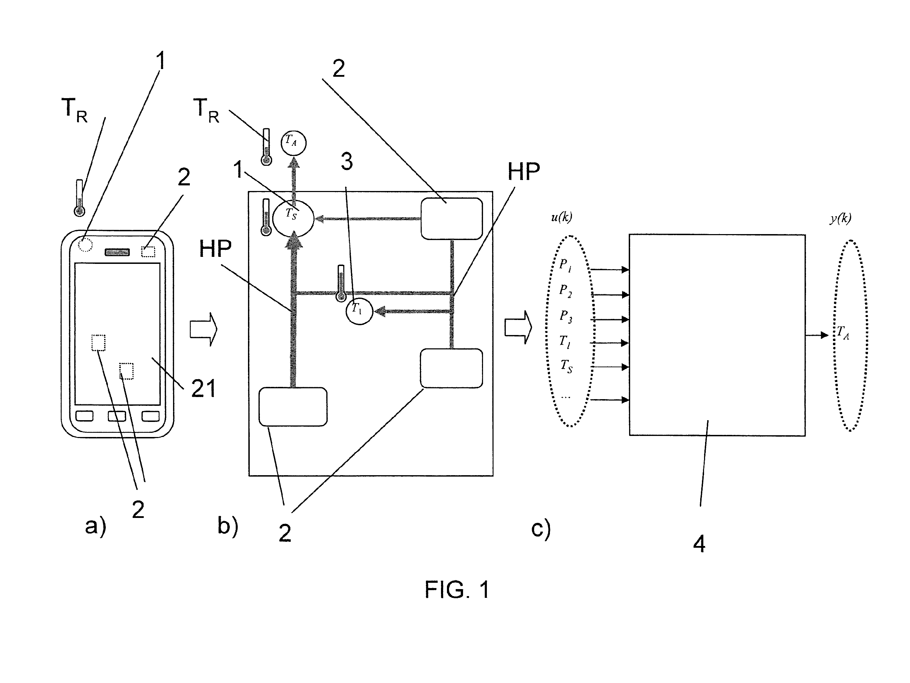

Fig. 1a) shows a diagram illustrating a mobile phone according to an embodiment of the present invention. The mobile phone includes a temperature sensor 1 and several components 2 generating heat during operation of the mobile phone, such as a display 21. The temperature sensor 1 provides a sensed ambient temperature $T_S$.
The temperature sensor 1 itself may not provide the real ambient temperature $T_R$ but a sensed ambient temperature $T_S$ deviating from the real ambient temperature $T_R$ because of a self-heating of the components 2 of the device that perturb the internal temperature sensor 1. Another reason for compensation may be a slow dynamic in responses to fast temperature changes. It is desired to determine the real ambient temperature $T_R$ sufficiently fast.
Switching to diagram 1b), a "thermal" block diagram of the mobile phone of diagram 1a) is shown. The heat generating components 2 are connected to the temperature sensor 1 and to each other by heat paths HP on which heat flux is propagated. In the present embodiment, another temperature sensor 3 is provided which other temperature sensor 3 may act as a sensor for sensing the temperature $T_1$ of a central processing unit of the device, or of any other component or location.
Preferably, a heat flux propagating to the temperature sensor 1 may be determined and be compensated for at the temperature sensor 1 by a compensator 4 as is shown in diagram 1c). The compensator 4 may be an entity, represented by hardware, software, or a combination of both, which receives the sensed ambient temperature $T_S$, the sensed temperature $T_1$, and information $P_1, P_2, P_3$ related to the power consumption of the three components 2 identified as most crucial in impacting the sensed ambient temperature $T_S$. The compensator 4 supplies at its output the compensated ambient temperature $T_A$.
In general, the compensator 4 may make use of a dynamic thermal model of the mobile device such as, for example, is shown in diagram 1b). The dynamic thermal model may mathematically be described by a differential equation system. The model may in one embodiment comprise one or more, and preferably the most relevant heat sources, and in another embodiment additionally one or more, and preferably the most relevant thermal conductivities, and in another embodiment additionally one or more, and preferably the most relevant heat capacities, as well as it comprises the temperature sensor, and it may comprise one or more optional temperature sensors that may be available in the mobile device.
The compensated ambient temperature $T_A$ may then be estimated from these inputs by using the following Equation 1) as compensator 4:

$$x(k+1) = Ax(k) + Bu(k)$$

$$y(k) = Cx(k) + Bu(k) \qquad \text{Collectively Equation 1)}$$

with $u(k)$ denoting the inputs at time step $k$, $y(k)$ denoting the output $T_A$, and $x(k)$ denoting an internal state vector of the compensator. $A$ is an $n$-by-$n$ matrix, $B$ an $n$-by-$m$ matrix, $C$ an $1$-by-$n$ matrix and $D$ an $1$-by-$m$ matrix, where $n$ is the number of states that depends on the complexity of the model and $m$ the number of inputs. Hence, the portable electronic device is modelled as a thermal system with heat sources, and optionally with heat capacities and/or thermal conductivities. From this model, a time-discrete compensator 4 according to the state space description of Equation 1) is derived, that can easily be implemented on a central processing unit of the portable electronic device by using the following pseudo software code:

```
while not stopped
{
  u=Read_Input(); // Read input
  y=C*x+D*u; // Calculate output
  x=A*x+B*u; // State Update
  TA=y; // Ambient Temperature = y
}
```

In addition or alternatively, the compensation model may represent a compensation model for compensating for a rather slow diffusion of the measure to the sensor element. Temperature dependent terms are applied to the compensation model. Such compensation model is modelled based on an inverse of the transfer function of a sensor model. This model is based on a differential diffusion equation with independent diffusion time constants. In a sample approximation, the sensor can be described by a transfer function in the frequency domain of first order:

$$G_1(s) = \frac{1}{(T_1 s + 1)}$$

where $s$ denotes the complex Laplace variable and $T_1$ is a time constant of the respective diffusion processes. If the housing of the humidity sensor is very complex, an additional pole and zero may be added, and the transfer function of the humidity sensor may be amended accordingly.

A time discrete state space representation of the time continuous state space representation for the first order sensor model may be:

$$x(k+1) = A_d^M \cdot x(k) + B_d^M \cdot w(k)$$

$$y(k) = C_d^M \cdot x(k) + D_d^M \cdot w(k)$$

$$x(0) = \frac{B_d^M}{1 - A_d^M} w(0)$$

where $w(k)$ denotes the sensed temperature at time step $k$ with the sampling time $t(k+1) - t(k) = T_s$. There is an internal state x(k) of the first order sensor model. y(k) denotes the modelled sensor output in the discrete time domain. In this time discrete state space representation, the coefficients A, B, C and D are determined by:

$$A_d^M = e^{-T_1 T_s}, \; B_d^M = -\frac{1}{T_1}\left(e^{-T_1 T_s} - 1\right)$$

$$C_d^M = 1, \; D_d^M = 0$$

where $T_s$ is the sampling time. If a first order sensor model is applied, the following first order compensation filter is proposed, which may be described by a transfer function $C_1(s)$ in the frequency domain by:

$$C_1(s) = \frac{(T_1 s + 1)}{(P s + 1)}.$$

Preferably, the compensation model transfer function *C(s)* is the inverse to the sensor model transfer function G(s), i.e. the diffusion function, such that

$$C(s) = 1/G(s)$$

The term (*Ps* + 1) is introduced in the compensator transfer function to make the function physically applicable. Parameter *P* is kept small in order to keep impact on filter function low, but can be used to filter measurement noise.A preferred feature of the compensation model transfer function *C(s)* is that the final value of C(s) converges to 1, i.e.

$$\lim_{s \to 0} C(s) = 1$$

This means that the compensation model only changes the sensor output characteristic during transition. When the compensation model is in steady state, it does not affect the sensor output, even if the modelling of the sensor and its housing is inaccurate.

A time discrete state space representation of the time continuous state space representation for the first order compensation model may be:

$$x(k+1) = A_d^C \cdot x(k) + B_d^C \cdot u(k)$$
$$y(k) = C_d^C \cdot x(k) + D_d^C \cdot u(k) \qquad \text{collectively Equation 2)}$$
$$x(0) = \frac{B_d^C}{1 - A_d^C} u(0)$$

where *u(k)* denotes the measured humidity at time step *k* with the sampling time *t(k+1) - t(k)* = $T_S$. There is an internal state x(k) of the first order compensator. y(k) denotes the compensated sensor signal in the discrete time domain and the coefficients A, B, C and D are determined by:

$$A_d^C = e^{-PT_s}, \ B_d^C = -\frac{1}{P}\left(e^{-PT_s} - 1\right)$$

$$C_d^C = \frac{P - T_1}{P^2}, \ D_d^C = \frac{T_1}{P}$$

The compensated temperature $T_A$ may be displayed on the display 21. The compensation models according to Equations 1) and 2) may be combined for providing a compensated temperature $T_A$ that is compensated with respect to both heat and time.

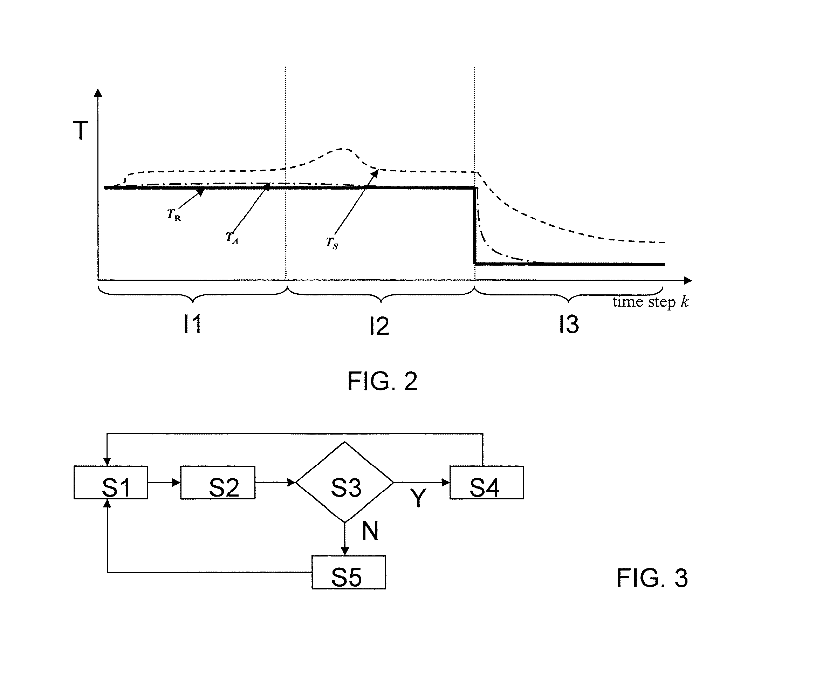

In a temperature T over time t chart according to FIG. 2, in which time t is represented by discrete time steps k*Δt, a sample real temperature characteristic $T_R$ in the ambient of a portable electronic device is shown by the straight line. The dashed line represents a corresponding ambient temperature $T_S$ as sensed by a temperature sensor of the mobile device. It becomes apparent from the chart in FIG. 2 that due to internal heating the temperature sensor detects an ambient temperature $T_S$ higher than the real ambient temperature $T_R$. Interval I1 may, for example, represent a time interval, in which the mobile device is operated at average load. However, in interval I2, it assumed that the mobile device at least temporarily is operated at high load, for example, by executing a video game requiring massive computational and display resources. This results in the sensed ambient temperature $T_S$ even more deviating from the real ambient temperature $T_R$: At the end of interval I2, the real ambient temperature $T_R$ drops, for example, due to the user of the mobile device entering a basement. The sensed ambient temperature $T_S$ follows the temperature drop in the real ambient temperature $T_R$ only slowly.

The dashed-dotted line, on the other hand, illustrates a compensated ambient temperature $T_A$ which is determined by using a compensator such as illustrated in diagram 1c), which is based on a thermal model of the portable electronic device. It can be seen, that from the beginning of the operation of the portable electronic device, a deviation of the compensated ambient temperature $T_A$ from the real ambient temperature $T_R$ is minimized, at least the compensated ambient temperature $T_A$ is lower than the sensed ambient temperature $T_S$. Even the high load operations of the mobile device releasing lots of heat do not impact the compensated ambient temperature $T_A$ very much.

In interval l3, the compensated ambient temperature $T_A$ much quicker aligns with the drop in the real ambient temperature $T_R$. This effect may be caused by implementing a temperature dependent compensation of dynamic contributions of the sensed ambient temperature $T_S$ in the compensator. A dynamic contribution is understood as any contribution in the spectral range with a frequency f>0 Hz. In case of a fast varying ambient temperature such as the step function at the end of interval I2, the compensator is enabled to accelerate the thermal dynamics of the mobile device such that the compensated ambient temperature $T_A$ responds faster to changes in the real ambient temperature $T_R$, and consequently in the sensed ambient temperature $T_S$. For such temperature dependent compensation of the dynamics of the sensed ambient temperature signal, it is referred to US Patent Publication US 2011/0307208.

Fig. 3 illustrates a flow chart of a method for operating an electronic portable device according to an embodiment of the present invention. In step S1 a new discrete ambient variable value is received by the compensator and is logged in combination with a time stamp in step S2 which time stamp indicates the time this value was generated or supplied. In step S3, it is verified if a system time of the portable electronic device is detected to be put back. If this is not the case (N), then in step S5 the compensator determines a new compensated ambient variable value and updates internal states of a model the compensator makes use of for the determination. Then the next ambient variable value is read in step S1. Whenever the system time of the portable electronic device is detected to be put back (Y), the compensation model is reset in step S4, and the next ambient variable value is received in step S1.

The compensator as may be used in any of the above embodiments preferably is implemented as a differential equation system, see Equations 1) or 2), which depends on values of the past, and specifically values of internal states x(k) of the past. When a compensator is started for the very first time, initial values of internal states of the compensator are required which initial values are calculated based on the assumption that the system is in a steady-state. In such assumption, the initial values of the internal states x(k+1) at the initial point in time k+1 are assumed to be equal to the internal states x(k) of a previous point in time k. This assumption is reasonable if the sensor system is started for the very first time or if the sensor system or the device was turned off for some time. In a preferred embodiment, a resetting of the determination of the compensated ambient variable is understood as a determination of initial values for the internal states according to the above steady-state assumption as is done after a break in the operation of the sensor system or the device.

In case the sensor system and/or the device is turned down only temporarily it is preferred to adjust the compensation of the sensed variable values. At a reactivation it is preferred to estimate the then actual internal states of the compensator. For doing so, the internal states prior to interruption are stored as last internal states, preferably in a non-volatile memory of the portable electronic device. At the reactivation the then actual internal states are estimated dependent on the stored last internal states, and dependent on an estimated course of the sensed variable between the interruption and the reactivation, and dependent on an estimated course of the other variables if any. By means of such an estimate of the actual internal states at reactivation the quality of compensated ambient variable values at reactivation can be improved.

**Claims**

1. Method for operating a portable electronic device, comprising
   sensing an ambient variable ($T_R$) with a sensor (1) of the portable electronic device,
   determining a compensated ambient variable ($T_A$) dependent on at least the sensed ambient variable ($T_S$),
   detecting if a system time of the portable electronic device exhibits an anomaly,
   resetting or adjusting the determination of the compensated ambient variable ($T_A$) if an anomaly is detected in the system time.

2. Method according to claim 1,
   wherein the sensed ambient variable ($T_S$) is supplied as or processed into time discrete ambient variable values,
   wherein a time stamp originating from the system time is assigned to each value of the sensed ambient variable ($T_S$), and
   wherein the time stamps of sensed ambient variable values are evaluated for detecting an anomaly.

3. Method according to claim 1 or claim 2, wherein an anomaly is detected in the system time if the system time is detected to be modified, and in particular if the system time is detected to be put back.

4. Method according to claim 2 in combination with claim 3, wherein an anomaly is detected in the system time if the time stamp of a sensed ambient variable value is prior to the time stamp of a previously supplied sensed ambient variable value.

5. Method according to claim 4, wherein the determination of the compensated ambient variable ($T_A$) is reset if the system time is detected to be put back.

6. Method according to any one of the preceding claims, wherein the compensated ambient variable ($T_A$) is determined also dependent on internal states ($x(k)$) of a compensation model (4), wherein resetting the determination of the compensated ambient variable ($T_A$) includes resetting the internal states ($x(a)$) of the compensation model (4).

7. Method according to any one of the preceding claims, wherein an anomaly is detected in the system time if the system time is detected to be put forward.

8. Method according to claim 2 in combination with claim 7, wherein the system time is detected to be put forward if the time stamp of a sensed ambient variable value indicates a time ahead of a time stamp supplied by another time base of the portable electronic device or indicates a time ahead of a time stamp provided by the system time for a different variable.

9. Method according to claim 8, wherein the determination of the compensated ambient variable ($T_A$) is adjusted by applying a sensed ambient variable value of the time indicated by the other time base or of the time indicated by the time stamp for the different variable.

10. Method according to any one of the preceding claims, wherein the compensated ambient variable ($T_A$) is determined dependent on a course of the ambient variable ($T_A$) over time.

11. Method according to any one of the preceding claims, wherein the sensor (1) is a temperature sensor, wherein the ambient variable ($T_R$) sensed is an ambient temperature of the portable electronic device, wherein the compensated ambient temperature ($T_A$) is determined dependent on the sensed ambient temperature ($T_S$) and one or more other variables ($P_1, P_2...$) , wherein the one or more other variables ($P_1, P_2...$) include one or more of a temperature of a component (2) of the portable electronic device measured by another temperature sensor (3), or information related to a power consumption of a component (2) of the portable electronic device such that the compensated ambient temperature ($T_A$) is determined by adjusting the sensed ambient temperature ($T_S$) by a temperature value representing an impact of heat released from the one or more components (2).

12. Computer program element for operating a portable electronic device, comprising computer program code means for implementing a method according to any one of the preceding claims when executed on a central processing unit of the portable electronic device.

13. Portable electronic device, comprising
a sensor (1) for sensing an ambient variable ($T_R$),
a compensator (4) for determining a compensated ambient variable ($T_A$) dependent on at least the sensed ambient variable ($T_S$),
a detector for detecting if of the portable electronic device exhibits an anomaly,
wherein the compensator (4) is adapted to reset or adjust the determination of the compensated ambient variable ($T_A$) if an anomaly is detected in the system time.

14. Portable electronic device according to claim 13,

wherein the compensator (4) is adapted to reset the determination of the compensated ambient variable ($T_A$) if a time stamp of a sensed ambient variable value is detected to be prior to a time stamp of a previously supplied sensed ambient variable value.

15. Portable electronic device according to claim 13 or claim 14,
   wherein the sensor (1) is a temperature sensor,
   wherein the ambient variable ($T_R$) sensed is an ambient temperature of the portable electronic device, and
   wherein the compensator (4) is adapted to determine a compensated ambient temperature ($T_A$).

FIG. 1

FIG. 2

FIG. 3

Europäisches
Patentamt

European
Patent Office

Office européen
des brevets

# EUROPEAN SEARCH REPORT

Application Number

EP 13 40 5051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/119018 A1 (SKARP FILIP [SE]) 19 May 2011 (2011-05-19) * the whole document * | 1-15 | INV. G06F11/30 |
| A | "Defensive programming Learning objective", , 21 March 2013 (2013-03-21), XP055088122, Retrieved from the Internet: URL:http://gate.upm.ro/management/Software _Engineering/DOCs/CourseLab-Support/BestPr acticesForSoftwareProgramming-ProgrammingT echniquesAndStrategies/5.DefensiveProgramm ing.pdf [retrieved on 2013-11-13] * the whole document * | 1-15 | |
| A | Anonymous: "Building Real Software: Defensive Programming: Being Just-Enough Paranoid", , 14 March 2012 (2012-03-14), XP055088198, Retrieved from the Internet: URL:http://swreflections.blogspot.de/2012/ 03/defensive-programming-being-just-enough .html [retrieved on 2013-11-13] * the whole document * | 1-15 | TECHNICAL FIELDS SEARCHED (IPC) G06F |

The present search report has been drawn up for all claims

| Place of search | Date of completion of the search | Examiner |
|---|---|---|
| Munich | 13 November 2013 | Salsa, Francesco |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 40 5051

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2013

| Patent document cited in search report | Publication date | Patent family member(s) | Publication date |
|---|---|---|---|
| US 2011119018 A1 | 19-05-2011 | US 2011119018 A1<br>WO 2011061033 A1 | 19-05-2011<br>26-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110307208 A